# EUROPEAN PATENT APPLICATION

(11) **EP 4 749 590 A1**
(43) Date of publication of application: **27.05.2026**
(21) Application number: 24855619.3
(22) Date of filing: 07.08.2024
(51) Int. Cl.: G06V 40/20

(54) **HUMAN POSE ESTIMATION METHOD AND DEVICE**

(30) Priority: 22.08.2023 CN 202311073006
(71) Applicant: Huawei Technologies Co., Ltd., Shenzhen, Guangdong 518129 (CN)
(72) Inventor: YOU, Wei, Shenzhen, Guangdong 518129 (CN); WANG, Yaoyuan, Shenzhen, Guangdong 518129 (CN); HE, Weihua, Shenzhen, Guangdong 518129 (CN); ZHANG, Ziyang, Shenzhen, Guangdong 518129 (CN); ZHOU, Shunbo, Shenzhen, Guangdong 518129 (CN); YANG, Changpeng, Shenzhen, Guangdong 518129 (CN)
(74) Representative: Pfenning, Meinig & Partner mbB
(86) International application number: PCT/CN2024/110435
(87) International publication number: WO 2025/039893

(57) **Abstract**

A human pose estimation method and apparatus relating to the field of video processing technologies are disclosed, to implement real-time optimization of an event camera-based model and improve a generalization capability. According to the human pose estimation method in this application, during inference of an event camera-based pose estimation model, a network parameter of the model can be optimized. A pose estimation result of an RGB image synchronously captured by an RGB camera is used as a label to optimize the event camera-based pose estimation model, to improve accuracy of the event camera-based pose estimation model.

## Description

### CROSS-REFERENCE TO RELATED APPLICATIONS

This application claims priority to Chinese Patent Application No. 202311073006.7, filed with the China National Intellectual Property Administration on August 22, 2023 and entitled "HUMAN POSE ESTIMATION METHOD AND APPARATUS", which is incorporated herein by reference in its entirety.

### TECHNICAL FIELD

This application relates to the field of video processing technologies, and in particular, to a human pose estimation method and apparatus.

### BACKGROUND

Human pose estimation is a typical issue in the computer vision field, and is an issue of inferring a key point of a human body based on a signal collected by a sensor, to provide an accurate human pose for intelligent interaction.

A most commonly used data source for human pose estimation is an RGB image captured by an RGB camera. However, due to a limitation of an operating principle, the RGB camera can output an entire RGB image only at a fixed frame rate. In an application scenario in which an ultra-low delay is needed, for example, autonomous driving, a delay cannot be further reduced. An event data stream captured by an event camera may also be used for human pose estimation. Compared with human pose estimation based on an RGB image, human pose estimation based on an event camera-based model has a lower delay. However, currently, the event camera-based model cannot be optimized, and a generalization capability is low.

### SUMMARY

Embodiments of this application provide a human pose estimation method and apparatus, to optimize an event camera-based model and improve a generalization capability.

According to a first aspect, an embodiment of this application provides a human pose estimation method. The method is applied to an image processing apparatus, and the image processing apparatus is coupled to a red-green-blue RGB camera and an event camera. The method may include: performing, by using a first pose estimation model, human pose estimation on first event stream data captured by the event camera, to obtain a first estimation result, where capture time of the first event stream data is the same as exposure time of a frame of RGB image captured by the RGB camera; updating a network parameter of the first pose estimation model by using a training sample set, where the training sample set includes a plurality of samples and a label corresponding to each of the plurality of samples, a first sample includes second event stream data captured by the event camera within exposure time of a first RGB image or feature information of the second event stream data, the first sample is any one of the plurality of samples, the first RGB image is a frame of image captured by the RGB camera within historical specified duration, a label corresponding to the first sample is a 2D human pose obtained by performing human pose estimation on the first RGB image by using a second pose estimation model; and performing, by using the updated first pose estimation model, human pose estimation on third event stream data captured by the event camera, to obtain a second estimation result.

In this embodiment of this application, network parameter adjustment, namely, model optimization, is supported during use (namely, inference) of an event camera-based pose estimation model, to improve a generalization capability. Although the RGB camera is likely to be affected by a change in a lighting condition, estimation accuracy of an RGB-based pose estimation model is high. Therefore, the RGB camera is used to provide guidance for optimization of the event camera-based pose estimation model, to improve accuracy of the event camera-based pose estimation model.

In a possible implementation, performing, by using the updated first pose estimation model, human pose estimation on the third event stream data captured by the event camera, to obtain the second estimation result includes:
performing feature extraction on the third event stream data to obtain feature information of the third event stream data, where the feature information of the third event stream data includes M event point cloud features and/or an octree voxel feature, and M is a positive integer, where
the M event point cloud features fall within n time periods, the n time periods are within the exposure time of the first RGB image, a first event point cloud feature among the M event point cloud features represents a pixel location at which an event item is generated within a first time period and a quantity of event items generated at the pixel location within the first time period, and the first time period is any one of the n time periods; and
the octree voxel feature is obtained by voxelizing, by using an octree, a plurality of event items included in the third event stream data and then performing feature extraction; and
inputting the feature information to the updated first pose estimation model to obtain the second estimation result.

In this embodiment of this application, a multi-level space occupation feature of event stream data is constructed in the foregoing manner. During construction of an online training sample, event data is expressed as a plurality of high-level space occupation statuses at different levels, and then the first pose estimation model of the event camera is trained jointly by using the feature and an event point cloud, to improve accuracy of a 2D pose.

In some scenarios, a two-dimensional image similar to a grayscale image may alternatively be generated by compressing event stream data into a frame, and then feature extraction is performed, by using a deep learning model in the image field, on an event frame obtained through compression into a frame.

In comparison with a manner in which the event point cloud feature and/or the octree voxel feature are/is used, in this manner of compression into a frame, a data amount is large, and an image obtained through compression into a frame includes a large quantity of pixel points that do not include event points, occupying large storage space. When the event point cloud feature and/or the octree voxel feature are/is used, a sparsity feature of event stream data can be retained, and a data amount is small.

In a possible implementation, the octree voxel feature included in the feature information of the third event stream data is generated in the following manner:
using three-dimensional space represented by the event items included in the third event stream data as a first-level node of an octree structure;
for each child node included in a first level and an i^{th} level in the octree structure, performing the following processing:
   if a quantity of event items included in the child node is less than or equal to a first quantity threshold, setting a voxel value of the child node to 0; or if a quantity of event items included in the child node is greater than a first quantity threshold, setting a voxel value of the child node to 1, and continuing to split the child node into eight equal parts to obtain eight child nodes at an (i+1)^{th} level, until quantities of event items included in all child nodes included in a last level is less than or equal to the first quantity threshold, to obtain voxel values of child nodes included in K levels, where i is an integer greater than 1 and less than K, and K is an integer greater than 1; and
   performing feature extraction on the voxel values of the child nodes included in the K levels to obtain the octree voxel feature.

In a possible implementation, performing feature extraction on the voxel values of the child nodes included in the K levels to obtain the octree voxel feature includes:
performing, by using a double-layer fully connected neural network, feature extraction on a one-dimensional vector including the voxel values of the child nodes included in the K levels, to obtain the octree voxel feature, where
in the one-dimensional vector, the voxel values of the child nodes included in the K levels are arranged according to a sequence of the child nodes in the three-dimensional space.

Feature extraction is performed, by using the double-layer fully connected neural network, on the one-dimensional vector including octree voxels, to obtain the octree voxels feature. This is easy to implement, and helps improve resource utilization.

In a possible implementation, updating the network parameter of the first pose estimation model by using the training sample set includes:
inputting the first sample to the first pose estimation model, to obtain a pose predicted-value of the first sample that is output by the first pose estimation model;
determining a loss value of the first pose estimation model based on the pose predicted-value of the first sample and the label corresponding to the first sample; and
adjusting the network parameter of the first pose estimation model based on the loss value.

In a possible implementation, before performing, by using the updated first pose estimation model, human pose estimation on the third event stream data captured by the event camera, to obtain the second estimation result, the method further includes:
determining that the image processing apparatus is in a first operating mode, where
in the first operating mode, the event camera is in an on state, and the RGB camera is in an off state; and
the second estimation result is used as a 2D human pose within a capture time period of the third event stream data.

In the foregoing embodiment, an operating mode is determined, and on states of the event camera and the RGB camera are adjusted based on the operating mode. In the first operating mode, the RGB camera does not need to be in an on state, to reduce power consumption.

In some embodiments, the operating mode of the image processing apparatus may be determined, for example, whether the image processing apparatus is in the first operating mode is determined, based on at least one of a human body movement speed, current light intensity, a power consumption requirement, or a frame rate requirement.

In a possible implementation, in the first operating mode, the image processing apparatus meets any one of the following:
the image processing apparatus is in a battery-powered state; or
the image processing apparatus is in a battery-powered state, and a remaining battery level of the battery is less than a battery level threshold; or
a frame rate needed by the image processing apparatus is greater than a frame rate threshold; or
a quantity of event items included in event stream data captured by the event camera within unit time is greater than a second quantity threshold; or
light intensity detected by the image processing apparatus is less than an intensity threshold; or
a frame rate needed by the image processing apparatus is less than or equal to the frame rate threshold, and a quantity of event items captured by the event camera within unit time is greater than a second quantity threshold; or
the image processing apparatus is in a power supply-powered state, and a quantity of event items captured by the event camera within unit time is greater than the second quantity threshold; or
the image processing apparatus is in a power supply-powered state, and a quantity of event items captured by the event camera within unit time is greater than the second quantity threshold; or
the image processing apparatus is in a power supply powered state, a quantity of event items captured by the event camera within unit time is greater than the second quantity threshold, and light intensity detected by the image processing apparatus is less than an intensity threshold.

In a possible implementation, the method further includes:
before obtaining the second estimation result, determining that the image processing apparatus is in a second operating mode, where in the second operating mode, the event camera is in an on state, and the RGB camera is in an on state;
performing human pose estimation on a second RGB image by using the second pose estimation model, to obtain a third estimation result, where exposure time of the second RGB image is a capture time period in which the event camera captures the third event stream data; and
after obtaining the second estimation result, using an average value of the second estimation result and the third estimation result as a 2D human pose within the capture time period of the third event stream data.

In a possible implementation, in the second operating mode, the image processing apparatus meets any one of the following:
a quantity of event items included in event stream data captured by the event camera within unit time is less than or equal to the second quantity threshold, and light intensity detected by the image processing apparatus is less than an intensity threshold; or
a quantity of event items captured by the event camera within unit time is greater than the second quantity threshold, and light intensity detected by the image processing apparatus is greater than an intensity threshold; or
a frame rate needed by the image processing apparatus is less than or equal to the frame rate threshold, a quantity of event items captured by the event camera within unit time is less than or equal to the second quantity threshold, and light intensity detected by the image processing apparatus is less than an intensity threshold; or
a frame rate needed by the image processing apparatus is less than or equal to the frame rate threshold, a quantity of event items captured by the event camera within unit time is greater than the second quantity threshold, and light intensity detected by the image processing apparatus is greater than an intensity threshold; or
the image processing apparatus is in a power supply powered state, a quantity of event items captured by the event camera within unit time is less than or equal to the second quantity threshold, and light intensity detected by the image processing apparatus is less than an intensity threshold; or
the image processing apparatus is in a power supply powered state, a quantity of event items captured by the event camera within unit time is greater than the second quantity threshold, and light intensity detected by the image processing apparatus is greater than an intensity threshold.

In the foregoing manner, in the case of a poor lighting condition and a low movement speed, both the event camera and the RGB camera have low reliability, and averaging is performed based on the two data sources to improve accuracy of pose estimation.

In a possible implementation, the method further includes:
determining that the image processing apparatus is in a third operating mode, where in the third operating mode, the RGB camera is in an on state, and the event camera is in an off state; and
performing, by using the second pose estimation model, human pose estimation on a third RGB image captured by the RGB camera, to obtain a 2D human pose within exposure time of the third RGB image.

In a possible implementation, in the third operating mode, the image processing apparatus meets any one of the following:
the image processing apparatus is in a power supply-powered state, a quantity of event items included in event stream data captured by the event camera within unit time is less than or equal to the second quantity threshold, and light intensity detected by the image processing apparatus is greater than an intensity threshold; or
a frame rate needed by the image processing apparatus is less than or equal to the frame rate threshold, a quantity of event items included in event stream data captured by the event camera within unit time is less than or equal to the second quantity threshold, and light intensity detected by the image processing apparatus is greater than an intensity threshold.

According to a second aspect, this application further provides an image processing apparatus. The image processing apparatus has a function of implementing the method according to any one of the first aspect or the possible implementations of the first aspect. The function may be implemented by hardware, or may be implemented by hardware executing corresponding software. The hardware or the software includes one or more modules corresponding to the function.

According to a third aspect, an embodiment of this application provides a human pose estimation method, applied to an image processing apparatus. The image processing apparatus is coupled to an RGB camera and an event camera, and includes:
determining an operating mode of the image processing apparatus; and
when the image processing apparatus is in a first operating mode, performing human pose estimation by using first event stream data captured by the event camera, to obtain a 2D human pose within a capture time period of the first event stream data; or
when the image processing apparatus is in a second operating mode, performing human pose estimation by using first event stream data captured by the event camera to obtain a first estimation result, performing human pose estimation by using a first RGB image captured by the RGB camera to obtain a second estimation result, and using an average value of the first estimation result and the second estimation result as a 2D human pose within a capture time period of the first event stream data, where exposure time of the first RGB image is the same as the capture time period of the first event stream data; or
when the image processing apparatus is in a third operating mode, performing human pose estimation by using a first RGB image captured by the RGB camera, to obtain a 2D human pose within exposure time of the first RGB image.

In this embodiment of this application, a data source to be used may be determined according to a requirement, to improve adaptation to a scenario and improve accuracy of human pose estimation.

In a possible implementation, in the first operating mode, the image processing apparatus meets any one of the following:
the image processing apparatus is in a battery-powered state; or
the image processing apparatus is in a battery-powered state, and a remaining battery level of the battery is less than a battery level threshold; or
a frame rate needed by the image processing apparatus is greater than a frame rate threshold; or
a quantity of event items included in event stream data captured by the event camera within unit time is greater than a second quantity threshold; or
light intensity detected by the image processing apparatus is less than an intensity threshold; or
a frame rate needed by the image processing apparatus is less than or equal to the frame rate threshold, and a quantity of event items included in event stream data captured by the event camera within unit time is greater than a second quantity threshold; or
the image processing apparatus is in a power supply-powered state, and a quantity of event items included in event stream data captured by the event camera within unit time is greater than the second quantity threshold; or
the image processing apparatus is in a power supply-powered state, and a quantity of event items included in event stream data captured by the event camera within unit time is greater than the second quantity threshold; or
the image processing apparatus is in a power supply-powered state, a quantity of event items included in event stream data captured by the event camera within unit time is greater than the second quantity threshold, and light intensity detected by the image processing apparatus is less than an intensity threshold.

In a possible implementation, in the second operating mode, the image processing apparatus meets any one of the following:
a quantity of event items included in event stream data captured by the event camera within unit time is less than or equal to the second quantity threshold, and light intensity detected by the image processing apparatus is less than an intensity threshold; or
a quantity of event items included in event stream data captured by the event camera within unit time is greater than the second quantity threshold, and light intensity detected by the image processing apparatus is greater than an intensity threshold; or
a frame rate needed by the image processing apparatus is less than or equal to the frame rate threshold, a quantity of event items included in event stream data captured by the event camera within unit time is less than or equal to the second quantity threshold, and light intensity detected by the image processing apparatus is less than an intensity threshold; or
a frame rate needed by the image processing apparatus is less than or equal to the frame rate threshold, a quantity of event items included in event stream data captured by the event camera within unit time is greater than the second quantity threshold, and light intensity detected by the image processing apparatus is greater than an intensity threshold; or
the image processing apparatus is in a power supply-powered state, a quantity of event items included in event stream data captured by the event camera within unit time is less than or equal to the second quantity threshold, and light intensity detected by the image processing apparatus is less than an intensity threshold; or
the image processing apparatus is in a power supply-powered state, a quantity of event items included in event stream data captured by the event camera within unit time is greater than the second quantity threshold, and light intensity detected by the image processing apparatus is greater than an intensity threshold.

In a possible implementation, in the third operating mode, the image processing apparatus meets any one of the following:
the image processing apparatus is in a power supply-powered state, a quantity of event items included in event stream data captured by the event camera within unit time is less than or equal to the second quantity threshold, and light intensity detected by the image processing apparatus is greater than an intensity threshold; or
a frame rate needed by the image processing apparatus is less than or equal to the frame rate threshold, a quantity of event items included in event stream data captured by the event camera within unit time is less than or equal to the second quantity threshold, and light intensity detected by the image processing apparatus is greater than an intensity threshold.

According to a fourth aspect, this application further provides an image processing apparatus. The image processing apparatus has a function of implementing the method according to any one of the third aspect or the possible implementations of the third aspect. The function may be implemented by hardware, or may be implemented by hardware executing corresponding software. The hardware or the software includes one or more modules corresponding to the function.

According to a fifth aspect, an embodiment of this application provides an image processing apparatus, including a processor and a memory. The processor is coupled to the memory. The memory is configured to store a program. The processor is configured to execute the program in the memory, to enable the image processing apparatus to perform the method according to any one of the implementations of the first aspect or the third aspect.

According to a sixth aspect, an embodiment of this application provides an electronic device, including an image processing apparatus, an event camera, and a red-green-blue RGB camera.

The event camera is configured to capture event stream data, and the RGB camera is configured to capture an RGB image.

The image processing apparatus is configured to perform, based on the event stream data and the RGB image, the method according to any one of the implementations of the first aspect or the third aspect.

According to a seventh aspect, an embodiment of this application provides an image processing apparatus. The apparatus may also be referred to as a digital processing chip or a chip. The chip includes a processing unit and a communication interface. The processing unit obtains program instructions through the communication interface. The program instructions are executed by the processing unit, and the processing unit is configured to perform a processing-related function in any one of the optional implementations of the first aspect or the third aspect.

According to an eighth aspect, an embodiment of this application provides a computer-readable storage medium. The computer-readable storage medium stores a computer program. When the computer program runs on a computer, the computer is enabled to perform the method according to any one of the optional implementations of the first aspect or the third aspect.

According to a ninth aspect, an embodiment of this application provides a computer program product including instructions. When the computer program product runs on a computer, the computer is enabled to perform the method according to any one of the optional implementations of the first aspect or the third aspect.

In this application, based on the implementations provided in the foregoing aspects, the implementations may be further combined to provide more implementations.

### BRIEF DESCRIPTION OF DRAWINGS

FIG. 1 is a diagram of a structure of an image processing system according to an embodiment of this application;
FIG. 2 is a schematic flowchart of a human pose estimation method according to an embodiment of this application;
FIG. 3 is a diagram of extracting an octree voxel feature according to an embodiment of this application;
FIG. 4 is a diagram of optimizing a pose estimation model according to an embodiment of this application;
FIG. 5 is a schematic flowchart of another human pose estimation method according to an embodiment of this application;
FIG. 6 is a schematic flowchart of joint pose estimation based on an RGB camera and an event camera according to an embodiment of this application;
FIG. 7 is an overall flowchart of a method for performing human pose estimation by an electronic device according to an embodiment of this application;
FIG. 8 is a schematic flowchart of still another human pose estimation method according to an embodiment of this application;
FIG. 9 is a diagram of a structure of an image processing apparatus according to an embodiment of this application;
FIG. 10 is a diagram of a structure of another image processing apparatus according to an embodiment of this application; and
FIG. 11 is a diagram of a structure of an electronic device according to an embodiment of this application.

### DESCRIPTION OF EMBODIMENTS

The following describes the technical solutions in embodiments of this application with reference to the accompanying drawings in embodiments of this application.

In the descriptions of this application, "a plurality of" means two or more, unless otherwise specified. In addition, "/" indicates an "or" relationship between associated objects. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A or B may be in a singular form or a plural form. In addition, to clearly describe the technical solutions in embodiments of this application, the terms "first", "second", and the like are used in embodiments of this application to distinguish between same items or similar items that provide basically same functions or purposes. A person skilled in the art can understand that the terms "first", "second", and the like do not limit a quantity or an execution sequence, and the terms "first", "second", and the like do not indicate a definite difference. It should be further noted that specific descriptions of some technical features in one embodiment may also be used to explain corresponding technical features mentioned in another embodiment, unless otherwise specified.

In embodiments of this application, an event camera (event camera) may be a device that outputs an asynchronous signal by measuring a dynamic light intensity change of each pixel. For example, the event camera may be a camera including one or more event camera sensors (which may also be referred to as event sensors for short). Different from a conventional camera that captures a complete image, the event camera captures an "event" (or referred to as an event item), and the event camera uses a luminance change of a pixel in a real scene as an event. The event sensor includes but is not limited to a dynamic vision sensor (dynamic vision sensor, DVS), an asynchronous time-based image sensor (asynchronous time-based image sensor, ATIS), a dynamic and active pixel vision sensor (dynamic and active pixel vision sensor, DAVIS), and the like.

The event camera captures a dynamic change in a scene in an event-driven manner. This may be understood as capturing a change in luminance of a pixel point in the scene. To be specific, the event camera outputs a change status of pixel luminance. The pixel point may also be referred to as a pixel for short. Specifically, when luminance of a pixel in a real scene changes, the event camera generates an event at the pixel. Event data corresponding to the event may include four parts: (t, x, y, p), where x and y are pixel point coordinates of the event in two-dimensional space, to be specific, a row value and a column value of an optical sensor corresponding to the pixel whose luminance changes, in other words, coordinates of the pixel whose luminance changes; t is a timestamp of the event, to be specific, time at which the luminance of the pixel changes; and p is a polarity of the event, indicating whether the luminance change is increasing or decreasing. A value of p may be 1 or -1. 1 indicates an increase in the luminance, and -1 indicates a decrease in the luminance.

This application may be applied to the following application scenarios: human-computer interaction, autonomous driving, a robot, a smart home, augmented reality (augmented reality, AR)/virtual reality (virtual reality, VR), sports and health, and the like.

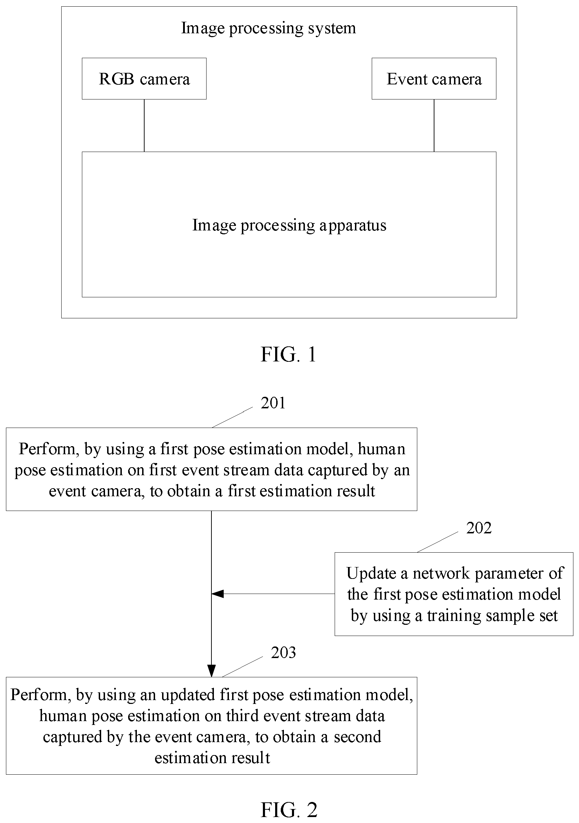

FIG. 1 is a diagram of a structure of an image processing system according to an embodiment of this application. The image processing system includes an image processing apparatus, a red-green-blue (RGB) camera, and an event camera. The RGB camera is configured to capture an RGB image stream. The RGB image stream (or an RGB video stream) includes a plurality of frames of RGB images. The event camera is configured to capture an event stream. The event stream includes event data. The image processing apparatus is configured to perform human pose estimation based on the RGB image stream captured by the RGB camera and/or the event stream captured by the event camera.

The image processing system may be deployed in one electronic device, or the components of the image processing system may be separately deployed. In a possible scenario, the image processing apparatus may be a server, and the server is connected to and communicates with the RGB camera and the event camera. The server may be a physical server or a cloud server. For example, the RGB camera and the event camera may be deployed in a terminal device, and the server communicates with the terminal device. For example, the terminal device sends the RGB image stream and the event stream to the server, so that the server performs human pose estimation. For another example, a camera includes the RGB camera and the event camera. The server may be coupled to the camera. The camera sends the RGB image stream and the event stream to the server, so that the server performs human pose estimation. For still another example, the RGB camera and the event camera may be separately disposed, and the image processing apparatus is coupled to the RGB camera and the event camera. For example, the image processing apparatus is a cloud server.

In another possible scenario, the image processing system is deployed in an electronic device. In this application, the electronic device may include but is not limited to a smart mobile phone, a tablet computer, a band, a head-mounted display device (Head-Mounted Display, HMD), an augmented reality (augmented reality, AR) device, a mixed reality (mixed reality, MR) device, a vehicle-mounted electronic device, a laptop computer (laptop computer), a personal computer (personal computer, PC), a monitoring device, a robot, a vehicle-mounted terminal, an autonomous vehicle, a smart home device, and the like. Certainly, a specific form of the electronic device is not limited in embodiments of this application.

For example, the electronic device, for example, a vehicle, a mobile phone, AR/VR glasses, a security monitoring device, a camera, or another smart home terminal, may access a cloud platform through a wired or wireless network. A server is disposed on the cloud platform. The server may include a centralized server or a distributed server. The electronic device may communicate with the server on the cloud platform through the wired or wireless network, to implement data transmission. For example, after collecting data, the electronic device may store or back up the data on the cloud platform, to prevent data loss. The electronic device may access an access point or a base station, to implement wireless or wired access to the cloud platform. For example, the access point may be a base station, and the electronic device is equipped with a SIM card, and implements network authentication of an operator based on the SIM card, to access a wireless network. Alternatively, the access point may include a router, and the electronic device accesses the router through a 2.4 GHz or 5 GHz wireless network, to access the cloud platform through the router.

In addition, the electronic device may independently perform data processing, or may implement data processing in collaboration with a cloud. This may be specifically adjusted based on an actual application scenario. For example, the electronic device may be equipped with an event camera. The event camera may operate collaboratively with an RGB camera or another sensor in the electronic device, or may operate independently. A processor disposed in the event camera or a processor disposed in the electronic device processes data captured by the event camera or another sensor, or may process, in collaboration with a cloud device, data captured by the event camera or another sensor.

The electronic device includes an image processing apparatus, the RGB camera, and the event camera. The image processing apparatus may be the processor, a processing chip, a processing chip system, or the like in the electronic device. The processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. The controller may generate an operation control signal based on an instruction operation code and a timing signal, to control instruction fetching and instruction execution.

A memory may be further disposed in the processor to store instructions and data. In some embodiments, the memory in the processor is a cache. The memory may store instructions or data that has been used or is cyclically used by the processor. If the processor needs to use the instructions or the data again, the processor may directly invoke the instructions or the data from the memory. This avoids repeated access, reduces waiting time of the processor, and therefore improves system efficiency.

In some embodiments, the electronic device further includes other components, such as a display, an interface for external memory, an internal memory, a bus interface, a button, a speaker, and an antenna. It should be noted that the electronic device provided in this application may include more or fewer components than those in the structure described above. The foregoing descriptions of the structure of the electronic device are merely an example for description. A person skilled in the art may add or remove a component in the electronic device according to a requirement. This is not limited in this application.

For example, in an autonomous driving scenario, an event camera and an RGB camera are deployed on an autonomous vehicle. The electronic device may be the autonomous vehicle. The event camera and the RGB camera photograph a scene around the vehicle, pose estimation is implemented on a pedestrian around the vehicle by using the solution provided in this application, and an action and an intention of the pedestrian around the vehicle are determined, to provide a basis for decision-making during autonomous driving. Alternatively, an image processing apparatus may be a vehicle-mounted terminal, and the event camera, the RGB camera, and the vehicle-mounted terminal that are deployed on the autonomous vehicle constitute an image processing system.

For another example, in an AR/VR scenario, an event camera and an RGB camera are located on AR/VR glasses or an AR/VR helmet. The electronic device may be the AR/VR glasses or the AR/VR helmet. The event camera and the RGB camera photograph a surrounding environment of a wearer, and a pose of a person in the environment is estimated, to provide a basis for interaction between an AR/VR system and the surrounding environment and the person.

For still another example, in a smart home scenario, an event camera and an RGB camera are at an indoor monitoring location, and the electronic device may be a smart home device. The event camera and the RGB camera photograph a user in an indoor scenario. Fusion human pose estimation is performed based on the event camera and the RGB camera by using the software and hardware architectures in this application. A pose of the indoor user is recorded, a behavior type and a purpose are intelligently inferred based on an action of the person, and intelligent decision-making and control are provided for an indoor device. Alternatively, the event camera, the RGB camera, and a control device constitute an image processing system. The control device may be a device for performing human pose estimation in a smart home system.

Currently, in a human pose estimation solution in which an event camera-based model is used for estimation, event data of an event camera is usually compressed into an image, and then the image is input to the estimation model. An output of the model is a heatmap of distribution of key points of a human body in space, and locations of the key points are calculated by using a soft-argmax function. According to a first aspect, the human pose estimation model used in the foregoing solution is trained offline based on a training dataset, and a weight parameter of a trained model is a fixed value, and a weight cannot be updated after the model is deployed. When training data and data collected after the deployment are distributed in different manners or have different patterns, a generalization capability of the model is limited, leading to a decrease in accuracy of human body estimation. According to a second aspect, in the foregoing solution, when a human body is still or moves at a low speed, an amount of event data generated by the event camera is significantly reduced, and quality of information included in image data obtained by compressing the event data into a frame is poor, leading to a decrease in accuracy of pose estimation.

In view of the first aspect, this application provides a first implementation of human pose estimation, to update a network parameter of an event camera-based model based on historical data, to improve a generalization capability of the model. In view of the second aspect, this application provides a second implementation of human pose estimation. An operating mode of an apparatus or a device may be adjusted according to a requirement, and whether to use an RGB camera-based pose estimation model and/or an event camera-based pose estimation model is determined according to a requirement, to improve accuracy of pose estimation.

The following first describes the first implementation.

In the first implementation, an RGB camera provides guidance for an online update of a pose estimation model of an event camera: High-precision 2D pose estimation is performed by using a pose estimation model of the RGB camera, an online training sample is constructed by using a pose estimation result of the RGB camera, and a weight (or a network parameter) of the pose estimation model of the event camera is updated online.

FIG. 2 is a schematic flowchart of a human pose estimation method according to an embodiment of this application. The method process may be performed by the foregoing image processing apparatus. The image processing apparatus may be a chip or a chip system, or may be a server or an electronic device. The image processing apparatus is coupled to an RGB camera and an event camera. Image shooting angle-of-view ranges of the RGB camera and the event camera are the same, or angles of view of the RGB camera and the event camera overlap, or an angle-of-view range of the RGB camera includes an angle of view of the event camera, or an angle of view of the event camera includes an angle of view of the RGB camera.

For ease of distinguishing between a pose estimation model corresponding to the RGB camera and a pose estimation model corresponding to the event camera, in subsequent descriptions, the pose estimation model corresponding to the event camera is referred to as a first pose estimation model, and the pose estimation model corresponding to the RGB camera is referred to as a second pose estimation model. The RGB camera is configured to capture an RGB image stream, and the RGB image stream includes a plurality of RGB images. The event camera is configured to capture an event stream. The image processing apparatus may perform human pose estimation based on the event stream and the RGB image stream.

201: The image processing apparatus performs, by using the first pose estimation model, human pose estimation on first event stream data captured by the event camera, to obtain a first estimation result. Capture time of the first event stream data is the same as exposure time of a frame of RGB image captured by the RGB camera.

202: The image processing apparatus updates a network parameter of the first pose estimation model by using a training sample set.

The training sample set includes a plurality of samples and a label corresponding to each of the plurality of samples. A first sample includes second event stream data captured by the event camera within exposure time of a first RGB image, or feature information of the second event stream data. The first sample is any one of the plurality of samples. The first RGB image is a frame of image captured by the RGB camera within historical specified duration. A label corresponding to the first sample is a 2D human pose obtained by performing human pose estimation on the first RGB image by using the second pose estimation model.

In some embodiments, the second pose estimation model may be obtained through pre-training by using an image dataset that can be obtained from a public channel. The second pose estimation model obtained through training by using the image dataset obtained from the public channel has high detection accuracy. However, the RGB camera is likely to be affected by a change in a lighting condition, leading to significant degradation of imaging quality and low detection accuracy. Therefore, the event camera is used to capture an event stream for human pose detection. The event camera is not affected by the lighting condition, so that detection accuracy can be improved.

The exposure time of the first RGB image is the same as capture time of the second event stream data. It can be understood that the RGB camera and the time camera are synchronous in capture time. It can be understood that each sample corresponds to one piece of event stream data, and feature extraction is performed on the event stream data to obtain feature information of the event stream data. The event stream data is obtained by the event camera within exposure time during which the RGB camera captures a frame of RGB image.

The second event stream data may be understood as a motion trajectory generated when a target object moves within a monitoring range of the event camera within the exposure time of the first RGB image. The first RGB image is captured by the RGB camera within the exposure time, and the first RGB image also includes the target object. It should be understood that the target object may be a person, and a human pose of the person is estimated. In some possible application scenarios, the target object may alternatively be another moving entity, for example, a moving animal. This is not specifically limited in this application.

Updating the network parameter of the first pose estimation model may be triggered by a user, or may be periodically performed, or may be triggered after a specific quantity of training samples are collected. Alternatively, estimation accuracy of the first pose estimation model may be periodically detected, and an update is triggered when the estimation accuracy does not meet a requirement. For example, a result of performing, by using the first pose estimation model, human pose estimation on event stream data captured by the event camera may be determined at intervals based on a result of performing, by using the second pose estimation model, human pose estimation on a captured RGB image, to determine estimation accuracy of the first pose estimation model. An occasion for triggering the update of the network parameter of the first pose estimation model is not specifically limited in this embodiment of this application.

203: The image processing apparatus performs, by using an updated first pose estimation model, human pose estimation on third event stream data captured by the event camera, to obtain a second estimation result.

After obtaining event stream data, the image processing apparatus constructs a sample based on the obtained event stream data. In some possible implementations, after event stream data is obtained, a sample may be constructed for a fixed quantity of event items in the event stream data. For example, each sample corresponds to 7000 event items. In other words, the sample includes 7000 event points. The 7000 event points constitute a sample. In another possible implementation, a sample may be constructed based on feature information obtained by performing feature extraction on event stream data. For example, feature information obtained by performing feature extraction on a fixed quantity of event items in event stream data constitutes a sample.

An input for the first pose estimation model is feature information of event stream data, and an output is a 2D human pose (which may also be understood as a 2D human pose estimation result) corresponding to the event stream data.

In a possible implementation, feature information of event stream data may include an event point cloud feature and/or an octree voxel feature. In a manner, feature information of event stream data includes M event point cloud features and an octree voxel feature. In another manner, feature information of event stream data includes only an event point cloud feature. In still another manner, feature information of event stream data includes only an octree voxel feature.

The third event stream data is used as an example. When human pose estimation is performed, by using the updated first pose estimation model, on the third event stream data captured by the event camera, feature extraction may be first performed on the third event stream data to obtain feature information of the third event stream data. Then the feature information of the third event stream data is input to the updated first pose estimation model, so that the first pose estimation model outputs a 2D human pose estimation result of the third event stream data, namely, the second estimation result.

The third event stream data is used as an example. The feature information of the third event stream data includes M event point cloud features. The M event point cloud features belong to n time periods, and the n time periods are within the exposure time of the first RGB image. The event point cloud feature may be expressed as (x, y, T, n), where (x, y) indicates a pixel location, to be specific, coordinates of a pixel at which an event is generated, T indicates a time period, and n indicates a quantity of event items generated at the pixel location (x, y) within the time period T. The event point cloud feature may include a pixel location at which an event item is generated within a time period and a quantity of event items generated at the pixel location within the event period. For example, a first event point cloud feature among the M event point cloud features includes a plurality of pixel locations at which event items are generated within a first time period and a quantity of event items at each of the plurality of pixel locations, and the first time period is any one of the M time periods.

For example, after the third event stream data is captured, a fixed quantity of event items, for example, 7000 event points, may be obtained from the third event stream data. A time range within which the event points are generated is evenly divided into N segments on a time axis, and then the time period T is normalized. A range of the time period range may be adjusted to 0-N through rounding down. Then a quantity of events at a same pixel location within each time period is accumulated, to obtain an event point cloud feature at each pixel location within each time period, where the event point cloud feature is expressed as (x, y, T, n). Events occurring within time periods that are close may be combined in the foregoing manner, to reduce a data amount. Further, the M event point cloud features are selected from combined event point cloud features. Therefore, the M event point cloud features belong to the n time periods, where n is less than or equal to N. To be specific, a size of data input to the first pose estimation model is M×4. Feature extraction may be performed on other event stream data in the foregoing manner. Details are not described herein again.

The following describes the octree voxel feature. An octree voxel feature of the third event stream data is further used as an example. The octree voxel feature of the third event stream data is obtained by voxelizing, by using an octree, a plurality of event items included in the third event stream data and then performing feature extraction.

In an example, the image processing apparatus may generate, in the following manner, the octree voxel feature included in the feature information of the third event stream data:

Three-dimensional space represented by the event items included in the third event stream data is used as a first-level node of an octree structure. Each node of the octree structure represents a volume element of a cube. If each node is further divided, the node may be divided into eight child nodes. For each child node included in a first level and an i^{th} level in the octree structure, the following processing is performed: If a quantity of event items included in the child node is less than or equal to a first quantity threshold, a voxel value of the child node is set to 0; or if a quantity of event items included in the child node is greater than a first quantity threshold, a voxel value of the child node is set to 1, and the child node is further split into eight equal parts to obtain eight child nodes at an (i+1)^{th} level, until quantities of event items included in all child nodes included in a last level is less than or equal to the first quantity threshold, to obtain voxel values of child nodes included in K levels, where i is an integer greater than 1 and less than K, and K is an integer greater than 1. Feature extraction is performed on the voxel values of the child nodes included in the K levels to obtain the octree voxel feature.

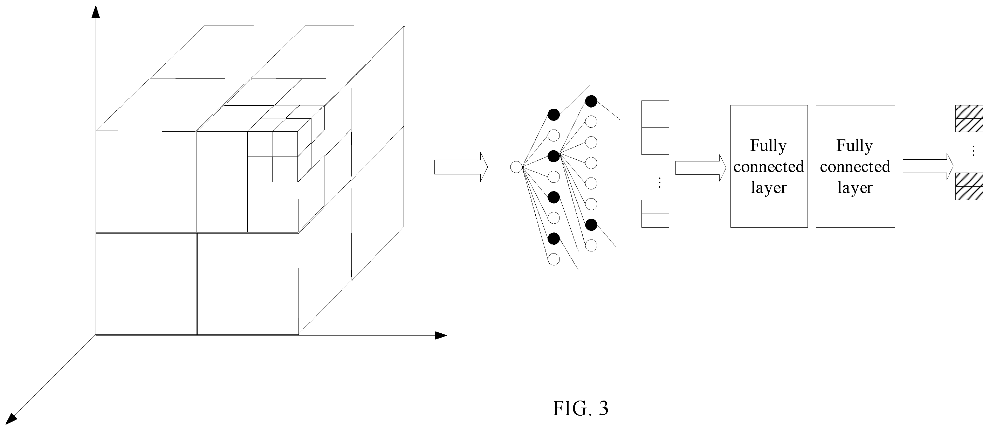

It can be understood that, in the foregoing manner, determining starts from the first level. As shown in FIG. 3, if a quantity of event items included in a node is less than or equal to the first quantity threshold, a voxel value of the node is set to 0; otherwise, a voxel value of the node is set to 1, and the node is further divided into eight child nodes. For each child node, whether a quantity of event items included in the child node is greater than the first quantity threshold is determined. If the quantity is greater than the first quantity threshold, the child node is set to 1; otherwise, the child node is set to 0, to obtain a second-level child node. Then a second-level child node in which a quantity of event items is greater than the first quantity threshold is further divided, until a K^{th} level is obtained through division. Quantities of event items included in all child nodes included in the K^{th} level are less than or equal to the first quantity threshold.

In some embodiments, feature extraction may be performed on the voxel values of the child nodes included in the K levels by using a neural network model, for example, a double-layer fully connected neural network. Specifically, the voxel values of the child nodes included in the K levels may be sequentially arranged into a one-dimensional vector according to a sequence of the child nodes in the three-dimensional space, and then feature extraction is performed, by using the double-layer fully connected neural network, on the one-dimensional vector including the voxel values of the child nodes included in the K levels, to obtain the octree voxel feature.

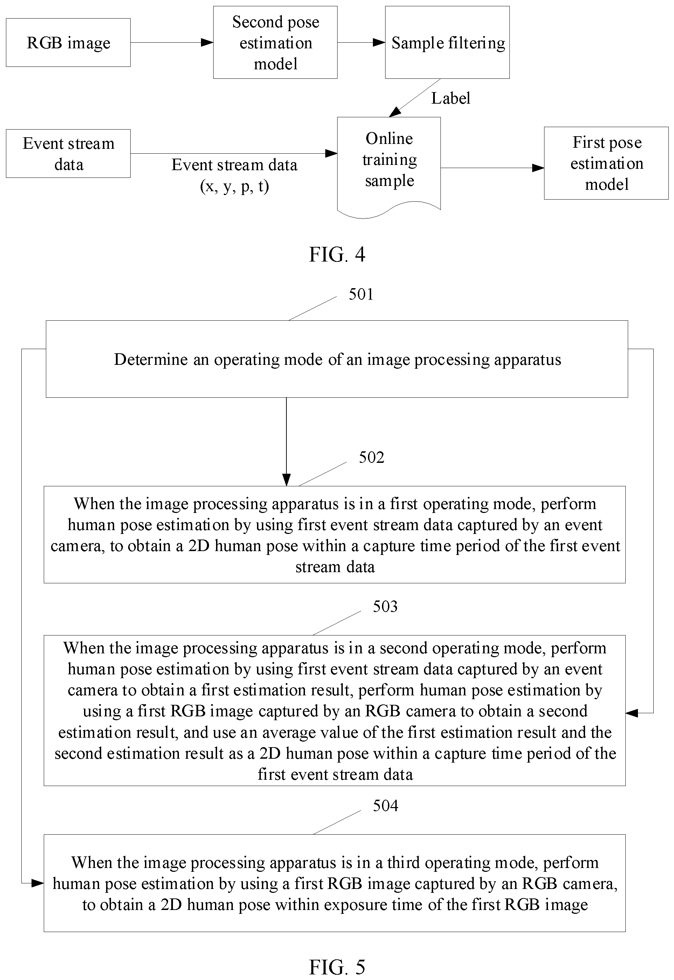

In this embodiment of this application, as shown in FIG. 4, a 2D human pose obtained by using the second pose estimation model based on an RGB image captured by the RGB camera is used as a label in an online training sample set. Then event stream data (or feature information of event stream data) captured synchronously with the RGB image is used as an online training sample and is input to the first pose estimation model to obtain a pose predicted-value of the sample. Then a loss value of the first pose estimation model is determined based on the pose predicted-value of the sample and a label corresponding to the sample. Then the network parameter of the first pose estimation model is adjusted based on the loss value. For example, a first sample in the training sample set is used as an example. When the network parameter of the first pose estimation model is updated by using the training sample set, the first sample may be input to the first pose estimation model, to obtain a pose predicted-value of the first sample that is output by the first pose estimation model; a loss value of the first pose estimation model is determined based on the pose predicted-value of the first sample and a label corresponding to the first sample; and the network parameter of the first pose estimation model is adjusted based on the loss value. In some scenarios, the training sample set may be divided into mini-batches, and then the network parameter (weight) of the first pose estimation model is updated by using a back propagation algorithm and a gradient descent algorithm. The batch is a batch of samples in the training sample set. In this scenario, the weight may be updated once for each mini-batch. In some other scenarios, the weight may alternatively be updated once for each sample by using the gradient descent algorithm. In still some other scenarios, the weight may alternatively be updated once for the training sample set, and the training sample set is used for a plurality of iterations.

In this embodiment of this application, a multi-level space occupation feature of event stream data is constructed in the foregoing manner. During construction of an online training sample, event data is expressed as a plurality of high-level space occupation statuses at different levels, and then the first pose estimation model of the event camera is trained jointly by using the feature and an event point cloud, to improve accuracy of a 2D pose.

The following describes the second implementation. An event camera has advantages of low power consumption, a low delay, and a high dynamic range. However, the event camera can output an event only when luminance changes in a field of view. During a pose estimation task, if a human body is still or moves within a small range, a quantity of events output by the event camera within unit time significantly decreases. It is difficult to provide sufficient information for a pose estimation model, leading to a decrease in accuracy of pose estimation. When only an RGB image is used, if the human body moves at a high speed or onsite light is dark, imaging quality of the RGB camera is significantly degraded, affecting accuracy of pose estimation. Therefore, in the second implementation of this application, an image processing apparatus may determine an operating mode according to a requirement (for example, a user requirement or a scenario requirement), to determine, based on the operating mode, whether to perform human pose estimation by using an event data stream captured by the event camera, or perform human pose estimation by using an RGB image captured by the RGB camera, or use, as a final result, an average value of a result of performing human pose estimation by using an event data stream captured by the event camera and a result of performing human pose estimation by using an RGB image captured by the RGB camera.

In some embodiments, the user requirement may be: determining the operating mode in response to a user operation. In some other embodiments, the scenario requirement may be, for example, at least one of status information of a current electronic device or environment information. For example, the status information of the electronic device may include at least one of a power supply status, a remaining battery level, a needed frame rate, and the like of the electronic device. The environment information may include related information of light intensity or a moving object within image shooting ranges of the RGB camera and the event camera. For example, the environment information may include a change status of light intensity within an image shooting range of an RGB sensor or a DVS sensor, or a movement status of an object within the image shooting range, for example, a movement speed of the object. The movement speed may be determined based on a quantity of event items captured by the event camera within unit time. A high movement speed indicates a large quantity of event items captured by the event camera within unit time. A low movement speed indicates a small quantity of event items captured by the event camera within unit time.

FIG. 5 is a schematic flowchart of a human pose estimation method according to the second implementation in embodiments of this application. The method process may be performed by the foregoing image processing apparatus. The image processing apparatus may be a chip or a chip system, or may be a server or an electronic device. The image processing apparatus is coupled to an RGB camera and an event camera.

501: Determine an operating mode of the image processing apparatus. The operating mode may include a first operating mode, a second operating mode, and a third operating mode.

In some embodiments, in the first operating mode, only the event camera is in an on state; in the second operating mode, both the RGB camera and the event camera are in an on state; and in the third operating mode, only the RGB camera is in an on state.

In some other embodiments, in any operating mode, both the event camera and the RGB camera are in an on state. However, in the first operating mode, only event stream data captured by the event camera is used for human pose estimation; and in the third operating mode, only an RGB image captured by the RGB camera is used for human pose estimation.

502: When the image processing apparatus is in the first operating mode, perform human pose estimation by using first event stream data captured by the event camera, to obtain a 2D human pose within a capture time period of the first event stream data.

503. When the image processing apparatus is in the second operating mode, perform human pose estimation by using first event stream data captured by the event camera to obtain a first estimation result, perform human pose estimation by using a first RGB image captured by the RGB camera to obtain a second estimation result, and use an average value of the first estimation result and the second estimation result as a 2D human pose within a capture time period of the first event stream data, where exposure time of the first RGB image is the same as the capture time period of the first event stream data. It should be noted that the average value herein may be an average value obtained through simple averaging, an average value obtained through weighted averaging, an average value obtained through geometric averaging, or the like.

504: When the image processing apparatus is in the third operating mode, perform human pose estimation by using a first RGB image captured by the RGB camera, to obtain a 2D human pose within exposure time of the first RGB image.

In a possible example, in the first operating mode, the image processing apparatus meets any one of the following 1-1 to 1-9.
1-1: The image processing apparatus is in a battery-powered state. In some application scenarios, if the image processing apparatus, the RGB camera, and the event camera are integrated into one electronic device, the image processing apparatus is in the battery-powered state, or the electronic device may be in a battery-powered state. In some other application scenarios, if the image processing apparatus is independently deployed in an electronic device, the image processing apparatus is in the battery-powered state, in other words, the electronic device is in a battery-powered state.
1-2: The image processing apparatus is in a battery-powered state, and a remaining battery level of the battery is less than a battery level threshold.
1-3: A frame rate needed by the image processing apparatus is greater than a frame rate threshold. For example, in some application scenarios, the image processing apparatus is an AR/VR device, or the image processing apparatus is deployed in an AR/VR device. A frame rate needed by the AR/VR device is usually high (in other words, the AR/VR device needs a high frame rate).
1-4: A quantity of event items captured by the event camera within unit time is greater than a second quantity threshold. In this case, a current movement speed of a target object (for example, a person) is high.
1-5: Light intensity detected by the image processing apparatus is less than an intensity threshold. This case may be understood as that current ambient light is dark. In some application scenarios, a light intensity sensor may be further deployed in the image processing apparatus or an electronic device in which the image processing apparatus is located. Data is obtained by the light intensity sensor and is transmitted to the image processing apparatus, so that the image processing apparatus determines a result of comparison between light intensity and the intensity threshold.
1-6: A frame rate needed by the image processing apparatus is less than or equal to a frame rate threshold, and a quantity of event items included in event stream data captured by the event camera within unit time is greater than a second quantity threshold.
1-7: The image processing apparatus is in a power supply-powered state, and a quantity of event items included in event stream data captured by the event camera within unit time is greater than a second quantity threshold. The power supply-powered state may be understood as being powered by a three-phase power supply or a two-phase power supply.
1-8: The image processing apparatus is in a power supply-powered state, and a quantity of event items included in event stream data captured by the event camera within unit time is greater than a second quantity threshold.
1-9: The image processing apparatus is in a power supply powered state, a quantity of event items included in event stream data captured by the event camera within unit time is greater than a second quantity threshold, and light intensity detected by the image processing apparatus is less than an intensity threshold.

In another possible example, in the second operating mode, the image processing apparatus meets any one of the following 2-1 to 2-6.
2-1: A quantity of event items included in event stream data captured by the event camera within unit time is less than or equal to a second quantity threshold, and light intensity detected by the image processing apparatus is less than an intensity threshold.
2-2: A quantity of event items included in event stream data captured by the event camera within unit time is greater than a second quantity threshold, and light intensity detected by the image processing apparatus is greater than an intensity threshold.
2-3: A frame rate needed by the image processing apparatus is less than or equal to a frame rate threshold, a quantity of event items included in event stream data captured by the event camera within unit time is less than or equal to a second quantity threshold, and light intensity detected by the image processing apparatus is less than an intensity threshold.
2-4: A frame rate needed by the image processing apparatus is less than or equal to a frame rate threshold, a quantity of event items included in event stream data captured by the event camera within unit time is greater than a second quantity threshold, and light intensity detected by the image processing apparatus is greater than an intensity threshold.
2-5: The image processing apparatus is in a power supply powered state, a quantity of event items included in event stream data captured by the event camera within unit time is less than or equal to a second quantity threshold, and light intensity detected by the image processing apparatus is less than an intensity threshold.
2-6: The image processing apparatus is in a power supply powered state, a quantity of event items included in event stream data captured by the event camera within unit time is greater than a second quantity threshold, and light intensity detected by the image processing apparatus is greater than an intensity threshold.

In still another possible example, in the third operating mode, the image processing apparatus meets the following 3-1 or 3-2.
3-1: The image processing apparatus is in a power supply powered state, a quantity of event items included in event stream data captured by the event camera within unit time is less than or equal to a second quantity threshold, and light intensity detected by the image processing apparatus is greater than an intensity threshold.
3-2: A frame rate needed by the image processing apparatus is less than or equal to a frame rate threshold, a quantity of event items included in event stream data captured by the event camera within unit time is less than or equal to a second quantity threshold, and light intensity detected by the image processing apparatus is greater than an intensity threshold.

In this embodiment of this application, in a manner of fusion pose estimation based on the RGB camera and the event camera, in an inference stage, an appropriate processing manner or data captured by an appropriate camera is selected based on power consumption, a frame rate, a movement speed, a light status, and the like, to obtain a final 2D pose result, so that accuracy of 2D pose estimation can be improved.

For example, the foregoing electronic device is a mobile phone, and the event camera (namely, the DVS sensor) is turned on by default. When a camera is used, the camera is invoked according to a current frame rate requirement. For example, if a high frame rate is needed, the event camera may be invoked, and a 2D pose estimation result is obtained by using event stream data captured by the event camera and the first pose estimation model.

Optionally, an operating mode may be further selected based on a current status of the device. For example, when a current battery level is lower than a specific threshold, a user may enable a power saving mode, and cannot perform normal photographing. In this case, only the event camera may be turned on. A reason lies in: Although a photo image of the event camera is not clear, the event camera has low power consumption. In addition, high-definition imaging is not needed during 2D human pose estimation.

Optionally, the device may sense a surrounding environment, to determine whether to switch the operating mode. For example, when the device is in a night scene or when the device is currently moving at a high speed, the event camera may be turned on. In a static scene, the event camera may not need to be turned on.

The operating mode is determined based on the foregoing application type, environment information, and device status. In addition, during running, whether to trigger operation switching may be determined, so that different cameras are turned on in different scenarios, with high adaptability.

In some embodiments, there are three operating modes: Only the RGB camera is turned on, only the event camera is turned on, and both the RGB camera and the event camera are turned on. In addition, for different products, reference factors for application type detection and environment detection may be different.

For example, a camera in a security scenario has a motion detection (motion detection) function. The camera stores recordings only when detecting a moving object, to reduce storage space and extend storage duration of a hard disk drive. Specifically, when the event camera and the RGB camera are used in a home camera or a security camera, only the event camera is turned on by default for human pose estimation.

For another example, when the event camera and the RGB camera are used in driver assistance or autonomous driving, during traveling of a vehicle, in a night scene or when the vehicle enters a tunnel, the RGB camera may be unable to capture effective scene information. In this case, although the event camera cannot obtain texture information, the event camera may detect a motion pose of a person within an image shooting range, providing significant assistance for determining/judgment of a driver. If a target object moves at a high speed, only the event camera may be used for 2D human pose estimation. If a target object moves at a low speed, the event camera and the RGB camera may be jointly used for 2D human pose estimation.

For still another example, when the event camera and the RGB camera are used in AR/VR glasses, a high requirement is imposed on a frame rate, and the event camera may be used for human pose estimation.

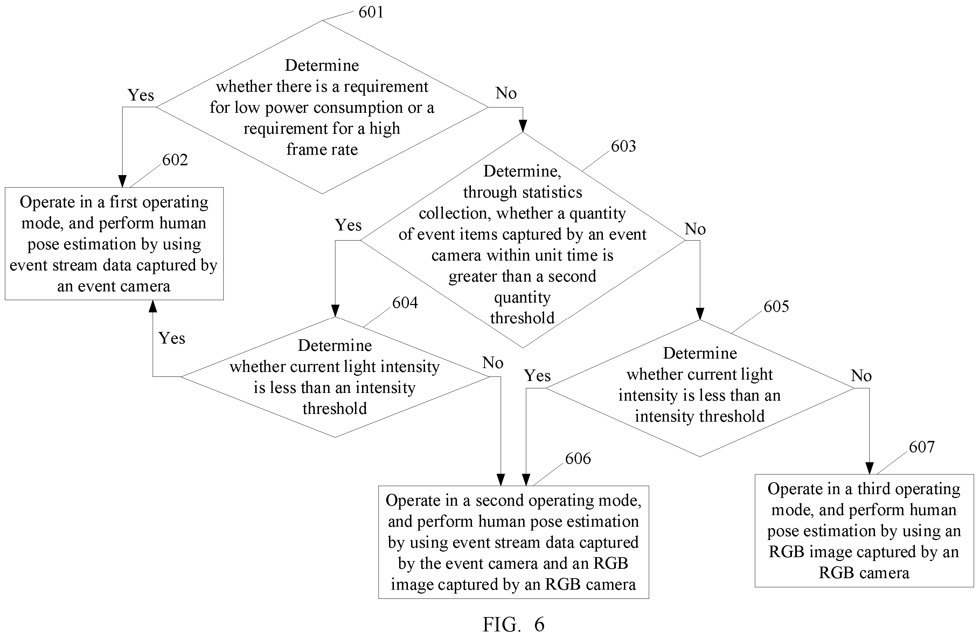

An electronic device is used below as an example to describe a joint pose estimation solution based on an RGB camera and an event camera in this application. The electronic device includes an image processing apparatus, an RGB camera, and an event camera. Refer to FIG. 6.
601: The electronic device determines whether there is a requirement for low power consumption or a requirement for a high frame rate; and if yes, performs 602; or if no, performs 603.
602: The electronic device operates in a first operating mode, and performs human pose estimation by using event stream data captured by the event camera.
603: The electronic device determines, through statistics collection, whether a quantity of event items captured by the event camera within unit time is greater than a second quantity threshold; and if yes, performs 604; or if no, performs 605.
604: The electronic device determines whether current light intensity is less than an intensity threshold; and if yes, performs 602; or if no, performs 606.
605: The electronic device determines whether current light intensity is less than an intensity threshold; and if yes, performs 606; or if no, performs 607.
606: The electronic device operates in a second operating mode, and performs human pose estimation by using event stream data captured by the event camera and an RGB image captured by the RGB camera. For example, an average value of a human pose estimation result based on the event stream data captured by the event camera and a human pose estimation result based on the RGB camera captured by the RGB camera is used as a final 2D human pose.

Herein, a magnitude of a movement speed is determined based on the quantity of event items captured within unit time. When the quantity of event items is less than the second quantity threshold, reliability of pose estimation based on the event camera decreases. Under a good lighting condition, the RGB image captured by RGB camera is used for human pose estimation. Under a poor lighting condition, both reliability of the event camera and reliability of the RGB camera are low, and therefore human pose estimation is performed through fusion.

607: The electronic device operates in a third operating mode, and performs human pose estimation by using an RGB image captured by the RGB camera.

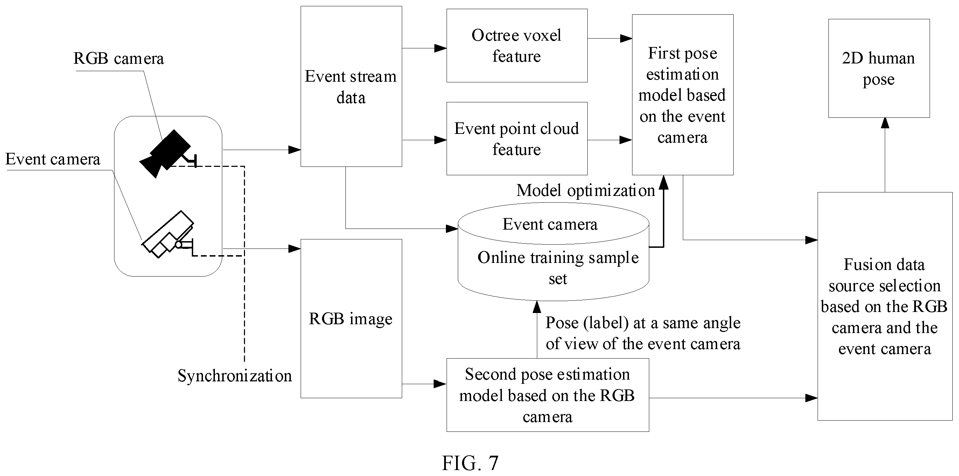

In some possible implementations, the first possible implementation and the second possible implementation may be implemented in combination. As shown in FIG. 7, the electronic device may determine an operating mode based on a current environment, a device status (for example, a frame rate/power consumption requirement, a movement speed, or light), or the like, and support an update of the first pose estimation model. For example, an update of the first pose estimation model may be triggered at intervals. Before an update is triggered, statistics are collected to obtain a training sample set. It should be noted that the obtained training sample set is collected when both the RGB camera and the event camera are turned on. An event point cloud feature and/or an octree voxel feature are/is used as an input for a pose estimation model of the event camera, to improve accuracy of pose estimation.

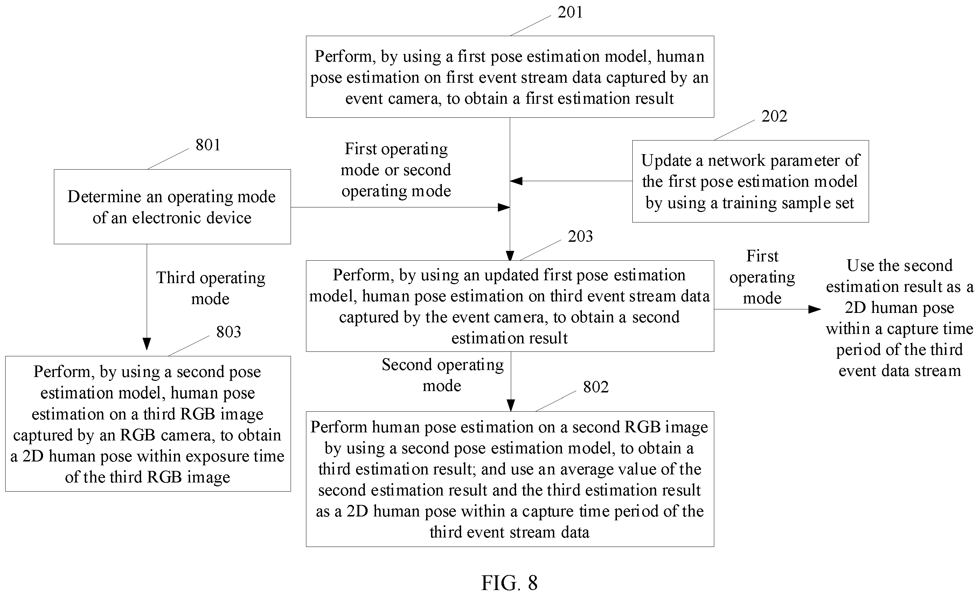

With reference to the embodiment corresponding to FIG. 2, the following describes a solution in which the first possible implementation and the second possible implementation are implemented in combination. FIG. 8 is a schematic flowchart of still another human pose estimation method according to an embodiment of this application. For example, an electronic device includes an image processing apparatus, an RGB camera, and an event camera. In FIG. 8, before performing, by using an updated first pose estimation model, human pose estimation on third event stream data captured by the event camera, to obtain a second estimation result, the electronic device performs 801. 801: Determine an operating mode of the electronic device (or the image processing apparatus). When it is determined that the electronic device (or the image processing apparatus) is in a first operating mode, 203 is performed. When it is determined that the electronic device (or the image processing apparatus) is in a second operating mode, 203 and 802 are performed. 802: Perform human pose estimation on a second RGB image by using a second pose estimation model, to obtain a third estimation result; and use an average value of the second estimation result and the third estimation result as a 2D human pose within a capture time period of the third event stream data. When it is determined that the electronic device (or the image processing apparatus) is in a third operating mode, 803 is performed: Perform, by using a second pose estimation model, human pose estimation on a third RGB image captured by the RGB camera, to obtain a 2D human pose within exposure time of the third RGB image.

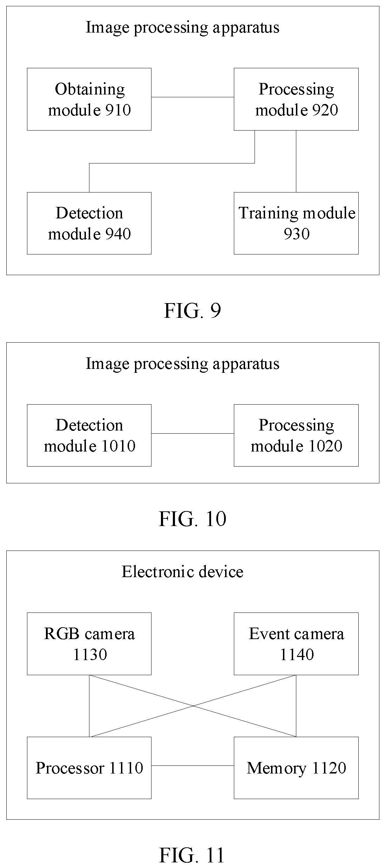

Based on the embodiments corresponding to FIG. 2, FIG. 5, and FIG. 8, to better implement the foregoing solutions in embodiments of this application, the following further provides related apparatuses or devices for implementing the foregoing solutions. FIG. 9 shows an image processing apparatus according to an embodiment of this application. The image processing apparatus is coupled to a red-green-blue RGB camera and an event camera. The image processing apparatus includes:
an obtaining module 910, configured to obtain a first event stream captured by the event camera;
a processing module 920, configured to perform, by using a first pose estimation model, human pose estimation on first event stream data captured by the event camera, to obtain a first estimation result, where capture time of the first event stream data is the same as exposure time of a frame of RGB image captured by the RGB camera; and
a training module 930, configured to update a network parameter of the first pose estimation model by using a training sample set, where the training sample set includes a plurality of samples and a label corresponding to each of the plurality of samples, a first sample includes feature information of second event stream data captured by the event camera within exposure time of a first RGB image, the first sample is any one of the plurality of samples, the first RGB image is a frame of image captured by the RGB camera within historical specified duration, a label corresponding to the first sample is a 2D human pose obtained by performing human pose estimation on the first RGB image by using a second pose estimation model.

The obtaining module 910 is further configured to obtain a third event stream captured by the event camera.

The processing module 920 is further configured to perform, by using the updated first pose estimation model, human pose estimation on third event stream data captured by the event camera, to obtain a second estimation result.

In a possible implementation, the processing module 920 is specifically configured to:
perform feature extraction on the third event stream data to obtain feature information of the third event stream data, where the feature information of the third event stream data includes M event point cloud features and/or an octree voxel feature, and M is a positive integer, where
the M event point cloud features fall within n time periods, the n time periods are within the exposure time of the first RGB image, a first event point cloud feature among the M event point cloud features represents a pixel location at which an event item is generated within a first time period and a quantity of event items generated at the pixel location within the first time period, and the first time period is any one of the n time periods; and
the octree voxel feature is obtained by voxelizing, by using an octree, a plurality of event items included in the third event stream data and then performing feature extraction; and
input the feature information to the updated first pose estimation model to obtain the second estimation result.

In a possible implementation, the processing module 920 is specifically configured to generate, in the following manner, the octree voxel feature included in the feature information of the third event stream data:
using three-dimensional space represented by the event items included in the third event stream data as a first-level node of an octree structure;
for each child node included in a first level and an i^{th} level in the octree structure, performing the following processing:
   if a quantity of event items included in the child node is less than or equal to a first quantity threshold, setting a voxel value of the child node to 0; or if a quantity of event items included in the child node is greater than a first quantity threshold, setting a voxel value of the child node to 1, and continuing to split the child node into eight equal parts to obtain eight child nodes at an (i+1)^{th} level, until quantities of event items included in all child nodes included in a last level is less than or equal to the first quantity threshold, to obtain voxel values of child nodes included in K levels, where i is an integer greater than 1 and less than K, and K is an integer greater than 1; and
   performing feature extraction on the voxel values of the child nodes included in the K levels to obtain the octree voxel feature.

In a possible implementation, when performing feature extraction on the voxel values of the child nodes included in the K levels to obtain the octree voxel feature, the processing module is specifically configured to:
perform, by using a double-layer fully connected neural network, feature extraction on a one-dimensional vector including the voxel values of the child nodes included in the K levels, to obtain the octree voxel feature, where
in the one-dimensional vector, the voxel values of the child nodes included in the K levels are arranged according to a sequence of the child nodes in the three-dimensional space.

In a possible implementation, the training module 930 is specifically configured to:
input the first sample to the first pose estimation model, to obtain a pose predicted-value of the first sample that is output by the first pose estimation model;
determine a loss value of the first pose estimation model based on the pose predicted-value of the first sample and the label corresponding to the first sample; and
adjust the network parameter of the first pose estimation model based on the loss value.

In a possible implementation, the apparatus further includes:
a detection module 940, configured to: before performing, by using the updated first pose estimation model, human pose estimation on the third event stream data captured by the event camera, to obtain the second estimation result, determine that the image processing apparatus is in a first operating mode, where
in the first operating mode, the event camera is in an on state, and the RGB camera is in an off state; and the second estimation result is used as a 2D human pose within a capture time period of the third event stream data.

In a possible implementation, the apparatus further includes:
a detection module 940, configured to: before obtaining the second estimation result, determine that the image processing apparatus is in a second operating mode, where in the second operating mode, the event camera is in an on state, and the RGB camera is in an on state, where
the processing module 920 is further configured to: perform human pose estimation on a second RGB image by using the second pose estimation model, to obtain a third estimation result, where exposure time of the second RGB image is a capture time period in which the event camera captures the third event stream data; and after obtaining the second estimation result, use an average value of the second estimation result and the third estimation result as a 2D human pose within the capture time period of the third event stream data.

In a possible implementation, the detection module 940 is further configured to determine that the image processing apparatus is in a third operating mode, where in the third operating mode, the RGB camera is in an on state, and the event camera is in an off state; and
the processing module 920 is further configured to perform, by using the second pose estimation model, human pose estimation on a third RGB image captured by the RGB camera, to obtain a 2D human pose within exposure time of the third RGB image.

FIG. 10 shows another image processing apparatus according to an embodiment of this application. The image processing apparatus is coupled to an RGB camera and an event camera, and includes:
a detection module 1010, configured to determine an operating mode of the image processing apparatus; and
a processing module 1020, configured to:
   when the image processing apparatus is in a first operating mode, perform human pose estimation by using first event stream data captured by the event camera, to obtain a 2D human pose within a capture time period of the first event stream data; or
   when the image processing apparatus is in a second operating mode, perform human pose estimation by using first event stream data captured by the event camera to obtain a first estimation result, perform human pose estimation by using a first RGB image captured by the RGB camera to obtain a second estimation result, and use an average value of the first estimation result and the second estimation result as a 2D human pose within a capture time period of the first event stream data, where exposure time of the first RGB image is the same as the capture time period of the first event stream data; or
   when the image processing apparatus is in a third operating mode, perform human pose estimation by using a first RGB image captured by the RGB camera, to obtain a 2D human pose within exposure time of the first RGB image.

FIG. 11 is a diagram of a structure of an electronic device according to an embodiment of this application. The electronic device includes a processor 1110, a memory 1120, an RGB camera 1130, and an event camera 1140. The processor 1110, the RGB camera 1130, and the event camera 1140 are interconnected through a line.

The processor 1110 is coupled to the memory 1120, and the memory is configured to store a program. For example, the memory stores program instructions and data corresponding to the steps in FIG. 2, FIG. 5, and FIG. 8. The processor 1110 is configured to execute the program in the memory, to enable to the electronic device to perform the method steps performed by the electronic device (or the image processing apparatus) in any one of the embodiments of FIG. 2, FIG. 5, and FIG. 8.

An embodiment of this application further provides an image processing apparatus. The image processing apparatus may also be referred to as a digital processing chip or a chip. The chip includes a processing unit and a communication interface. The processing unit obtains program instructions through the communication interface. The program instructions are executed by the processing unit. The processing unit is configured to perform the method steps performed by the electronic device (or the image processing apparatus) in any one of the embodiments of FIG. 2, FIG. 5, and FIG. 8.

An embodiment of this application further provides a digital processing chip. A circuit and one or more interfaces for implementing the processor 1110 or the functions of the processor 1110 are integrated into the digital processing chip. When a memory is integrated into the digital processing chip, the digital processing chip may perform the method steps in any one or more of the foregoing embodiments. When no memory is integrated into the digital processing chip, the digital processing chip may be connected to an external memory through a communication interface. The digital processing chip implements, based on program code stored in the external memory, the actions performed by the electronic device in the foregoing embodiments.

The image processing apparatus provided in embodiments of this application may be a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable a chip in a server to perform the human pose estimation method described in the embodiment shown in FIG. 2, FIG. 5, or FIG. 8. Optionally, the storage unit is a storage unit in the chip, for example, a register or a buffer. Alternatively, the storage unit may be a storage unit in a radio access device but outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. A general-purpose processor may be a microprocessor, any conventional processor, or the like.

In addition, it should be noted that the described apparatus embodiments are merely examples. The units described as separate components may or may not be physically separated, and components shown as units may or may not be physical units, to be specific, may be located in one place, or may be distributed on a plurality of network units. Some or all of the modules may be selected according to actual requirements to achieve the objectives of the solutions of embodiments. In addition, in the accompanying drawings of the apparatus embodiments provided in this application, a connection relationship between modules indicates that the modules have a communication connection, which may be specifically implemented as one or more communication buses or signal cables.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CPU, a dedicated memory, a dedicated component, or the like. Usually, any function performed by a computer program may be easily implemented by corresponding hardware. In addition, a specific hardware structure used to implement a same function may be in various forms, for example, in a form of an analog circuit, a digital circuit, or a dedicated circuit. However, in this application, an implementation by using a software program is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk drive, a read-only memory (read-only memory, ROM), a random access memory (random access memory, RAM), a magnetic disk, or a compact disc of a computer, and includes several instructions for instructing a computer device (which may be a personal computer, a server, a network device, or the like) to perform the methods described in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored on the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A human pose estimation method, applied to an image processing apparatus, wherein the image processing apparatus is coupled to a red-green-blue RGB camera and an event camera, and the method comprises:
performing, by using a first pose estimation model, human pose estimation on first event stream data captured by the event camera, to obtain a first estimation result, wherein capture time of the first event stream data is the same as exposure time of a frame of RGB image captured by the RGB camera;
updating a network parameter of the first pose estimation model by using a training sample set, wherein the training sample set comprises a plurality of samples and a label corresponding to each of the plurality of samples, a first sample comprises feature information of second event stream data captured by the event camera within exposure time of a first RGB image, the first sample is any one of the plurality of samples, the first RGB image is a frame of image captured by the RGB camera within historical specified duration, a label corresponding to the first sample is a 2D human pose obtained by performing human pose estimation on the first RGB image by using a second pose estimation model; and
performing, by using the updated first pose estimation model, human pose estimation on third event stream data captured by the event camera, to obtain a second estimation result.

2. The method according to claim 1, wherein performing, by using the updated first pose estimation model, human pose estimation on the third event stream data captured by the event camera, to obtain the second estimation result comprises:
performing feature extraction on the third event stream data to obtain feature information of the third event stream data, wherein the feature information of the third event stream data comprises M event point cloud features and/or an octree voxel feature, and M is a positive integer, wherein
the M event point cloud features fall within n time periods, the n time periods are within the exposure time of the first RGB image, a first event point cloud feature among the M event point cloud features represents a pixel location at which an event item is generated within a first time period and a quantity of event items generated at the pixel location within the first time period, and the first time period is any one of the n time periods; and
the octree voxel feature is obtained by voxelizing, by using an octree, a plurality of event items comprised in the third event stream data and then performing feature extraction; and
inputting the feature information to the updated first pose estimation model to obtain the second estimation result.

3. The method according to claim 2, wherein the octree voxel feature comprised in the feature information of the third event stream data is generated in the following manner:
using three-dimensional space represented by the event items comprised in the third event stream data as a first-level node of an octree structure;
for each child node comprised in a first level and an i^{th} level in the octree structure, performing the following processing:
if a quantity of event items comprised in the child node is less than or equal to a first quantity threshold, setting a voxel value of the child node to 0; or if a quantity of event items comprised in the child node is greater than a first quantity threshold, setting a voxel value of the child node to 1, and continuing to split the child node into eight equal parts to obtain eight child nodes at an (i+1)^{th} level, until quantities of event items comprised in all child nodes comprised in a last level is less than or equal to the first quantity threshold, to obtain voxel values of child nodes comprised in K levels, wherein i is an integer greater than 1 and less than K, and K is an integer greater than 1; and
performing feature extraction on the voxel values of the child nodes comprised in the K levels to obtain the octree voxel feature.

4. The method according to claim 3, wherein performing feature extraction on the voxel values of the child nodes comprised in the K levels to obtain the octree voxel feature comprises:
performing, by using a double-layer fully connected neural network, feature extraction on a one-dimensional vector comprising the voxel values of the child nodes comprised in the K levels, to obtain the octree voxel feature, wherein
in the one-dimensional vector, the voxel values of the child nodes comprised in the K levels are arranged according to a sequence of the child nodes in the three-dimensional space.

5. The method according to any one of claims 1 to 4, wherein updating the network parameter of the first pose estimation model by using the training sample set comprises:
inputting the first sample to the first pose estimation model, to obtain a pose predicted-value of the first sample that is output by the first pose estimation model;
determining a loss value of the first pose estimation model based on the pose predicted-value of the first sample and the label corresponding to the first sample; and
adjusting the network parameter of the first pose estimation model based on the loss value.

6. The method according to any one of claims 1 to 5, wherein before performing, by using the updated first pose estimation model, human pose estimation on the third event stream data captured by the event camera, to obtain the second estimation result, the method further comprises:
determining that the image processing apparatus is in a first operating mode, wherein
in the first operating mode, the event camera is in an on state, and the RGB camera is in an off state; and
the second estimation result is used as a 2D human pose within a capture time period of the third event stream data.

7. The method according to claim 6, wherein in the first operating mode, the image processing apparatus meets any one of the following:
the image processing apparatus is in a battery-powered state; or
the image processing apparatus is in a battery-powered state, and a remaining battery level of the battery is less than a battery level threshold; or
a frame rate needed by the image processing apparatus is greater than a frame rate threshold; or
a quantity of event items comprised in event stream data captured by the event camera within unit time is greater than a second quantity threshold; or
light intensity detected by the image processing apparatus is less than an intensity threshold; or
a frame rate needed by the image processing apparatus is less than or equal to the frame rate threshold, and a quantity of event items captured by the event camera within unit time is greater than a second quantity threshold; or
the image processing apparatus is in a power supply-powered state, and a quantity of event items captured by the event camera within unit time is greater than the second quantity threshold; or
the image processing apparatus is in a power supply-powered state, and a quantity of event items captured by the event camera within unit time is greater than the second quantity threshold; or
the image processing apparatus is in a power supply powered state, a quantity of event items captured by the event camera within unit time is greater than the second quantity threshold, and light intensity detected by the image processing apparatus is less than an intensity threshold.

8. The method according to any one of claims 1 to 5, wherein the method further comprises:
before obtaining the second estimation result, determining that the image processing apparatus is in a second operating mode, wherein in the second operating mode, the event camera is in an on state, and the RGB camera is in an on state;
performing human pose estimation on a second RGB image by using the second pose estimation model, to obtain a third estimation result, wherein exposure time of the second RGB image is a capture time period in which the event camera captures the third event stream data; and
after obtaining the second estimation result, using an average value of the second estimation result and the third estimation result as a 2D human pose within the capture time period of the third event stream data.

9. The method according to claim 8, wherein in the second operating mode, the image processing apparatus meets any one of the following:
a quantity of event items comprised in event stream data captured by the event camera within unit time is less than or equal to the second quantity threshold, and light intensity detected by the image processing apparatus is less than an intensity threshold; or
a quantity of event items captured by the event camera within unit time is greater than the second quantity threshold, and light intensity detected by the image processing apparatus is greater than an intensity threshold; or
a frame rate needed by the image processing apparatus is less than or equal to the frame rate threshold, a quantity of event items captured by the event camera within unit time is less than or equal to the second quantity threshold, and light intensity detected by the image processing apparatus is less than an intensity threshold; or
a frame rate needed by the image processing apparatus is less than or equal to the frame rate threshold, a quantity of event items captured by the event camera within unit time is greater than the second quantity threshold, and light intensity detected by the image processing apparatus is greater than an intensity threshold; or
the image processing apparatus is in a power supply powered state, a quantity of event items captured by the event camera within unit time is less than or equal to the second quantity threshold, and light intensity detected by the image processing apparatus is less than an intensity threshold; or
the image processing apparatus is in a power supply-powered state, a quantity of event items captured by the event camera within unit time is greater than the second quantity threshold, and light intensity detected by the image processing apparatus is greater than an intensity threshold.

10. The method according to any one of claims 6 to 9, wherein the method further comprises:
determining that the image processing apparatus is in a third operating mode, wherein in the third operating mode, the RGB camera is in an on state, and the event camera is in an off state; and
performing, by using the second pose estimation model, human pose estimation on a third RGB image captured by the RGB camera, to obtain a 2D human pose within exposure time of the third RGB image.

11. The method according to claim 10, wherein in the third operating mode, the image processing apparatus meets any one of the following:
the image processing apparatus is in a power supply-powered state, a quantity of event items comprised in event stream data captured by the event camera within unit time is less than or equal to the second quantity threshold, and light intensity detected by the image processing apparatus is greater than an intensity threshold; or
a frame rate needed by the image processing apparatus is less than or equal to the frame rate threshold, a quantity of event items comprised in event stream data captured by the event camera within unit time is less than or equal to the second quantity threshold, and light intensity detected by the image processing apparatus is greater than an intensity threshold.

12. An image processing apparatus, wherein the image processing apparatus is coupled to a red-green-blue RGB camera and an event camera, and the image processing apparatus comprises:
an obtaining module, configured to obtain a first event stream captured by the event camera;
a processing module, configured to perform, by using a first pose estimation model, human pose estimation on first event stream data captured by the event camera, to obtain a first estimation result, wherein capture time of the first event stream data is the same as exposure time of a frame of RGB image captured by the RGB camera; and
a training module, configured to update a network parameter of the first pose estimation model by using a training sample set, wherein the training sample set comprises a plurality of samples and a label corresponding to each of the plurality of samples, a first sample comprises feature information of second event stream data captured by the event camera within exposure time of a first RGB image, the first sample is any one of the plurality of samples, the first RGB image is a frame of image captured by the RGB camera within historical specified duration, a label corresponding to the first sample is a 2D human pose obtained by performing human pose estimation on the first RGB image by using a second pose estimation model, wherein
the obtaining module is further configured to obtain a third event stream captured by the event camera; and
the processing module is further configured to perform, by using the updated first pose estimation model, human pose estimation on third event stream data captured by the event camera, to obtain a second estimation result.

13. The apparatus according to claim 12, wherein the processing module is specifically configured to:
perform feature extraction on the third event stream data to obtain feature information of the third event stream data, wherein the feature information of the third event stream data comprises M event point cloud features and/or an octree voxel feature, and M is a positive integer, wherein
the M event point cloud features fall within n time periods, the n time periods are within the exposure time of the first RGB image, a first event point cloud feature among the M event point cloud features represents a pixel location at which an event item is generated within a first time period and a quantity of event items generated at the pixel location within the first time period, and the first time period is any one of the n time periods; and
the octree voxel feature is obtained by voxelizing, by using an octree, a plurality of event items comprised in the third event stream data and then performing feature extraction; and
input the feature information to the updated first pose estimation model to obtain the second estimation result.

14. The apparatus according to claim 13, wherein the processing module is specifically configured to generate, in the following manner, the octree voxel feature comprised in the feature information of the third event stream data:
using three-dimensional space represented by the event items comprised in the third event stream data as a first-level node of an octree structure;
for each child node comprised in a first level and an i^{th} level in the octree structure, performing the following processing:
if a quantity of event items comprised in the child node is less than or equal to a first quantity threshold, setting a voxel value of the child node to 0; or if a quantity of event items comprised in the child node is greater than a first quantity threshold, setting a voxel value of the child node to 1, and continuing to split the child node into eight equal parts to obtain eight child nodes at an (i+1)^{th} level, until quantities of event items comprised in all child nodes comprised in a last level is less than or equal to the first quantity threshold, to obtain voxel values of child nodes comprised in K levels, wherein i is an integer greater than 1 and less than K, and K is an integer greater than 1; and
performing feature extraction on the voxel values of the child nodes comprised in the K levels to obtain the octree voxel feature.

15. The apparatus according to claim 14, wherein when performing feature extraction on the voxel values of the child nodes comprised in the K levels to obtain the octree voxel feature, the processing module is specifically configured to:
perform, by using a double-layer fully connected neural network, feature extraction on a one-dimensional vector comprising the voxel values of the child nodes comprised in the K levels, to obtain the octree voxel feature, wherein
in the one-dimensional vector, the voxel values of the child nodes comprised in the K levels are arranged according to a sequence of the child nodes in the three-dimensional space.

16. The apparatus according to any one of claims 13 to 15, wherein the training module is specifically configured to:
input the first sample to the first pose estimation model, to obtain a pose predicted-value of the first sample that is output by the first pose estimation model;
determine a loss value of the first pose estimation model based on the pose predicted-value of the first sample and the label corresponding to the first sample; and
adjust the network parameter of the first pose estimation model based on the loss value.

17. The apparatus according to any one of claims 13 to 16, further comprising:
a detection module, configured to: before performing, by using the updated first pose estimation model, human pose estimation on the third event stream data captured by the event camera, to obtain the second estimation result, determine that the image processing apparatus is in a first operating mode, wherein
in the first operating mode, the event camera is in an on state, and the RGB camera is in an off state; and
the second estimation result is used as a 2D human pose within a capture time period of the third event stream data.

18. The apparatus according to claim 17, wherein in the first operating mode, the image processing apparatus meets any one of the following:
the image processing apparatus is in a battery-powered state; or
the image processing apparatus is in a battery-powered state, and a remaining battery level of the battery is less than a battery level threshold; or
a frame rate needed by the image processing apparatus is greater than a frame rate threshold; or
a quantity of event items comprised in event stream data captured by the event camera within unit time is greater than a second quantity threshold; or
light intensity detected by the image processing apparatus is less than an intensity threshold; or
a frame rate needed by the image processing apparatus is less than or equal to the frame rate threshold, and a quantity of event items captured by the event camera within unit time is greater than a second quantity threshold; or
the image processing apparatus is in a power supply-powered state, and a quantity of event items captured by the event camera within unit time is greater than the second quantity threshold; or
the image processing apparatus is in a power supply-powered state, and a quantity of event items captured by the event camera within unit time is greater than the second quantity threshold; or
the image processing apparatus is in a power supply powered state, a quantity of event items captured by the event camera within unit time is greater than the second quantity threshold, and light intensity detected by the image processing apparatus is less than an intensity threshold.

19. The apparatus according to any one of claims 14 to 18, further comprising:
a detection module, configured to: before obtaining the second estimation result, determine that the image processing apparatus is in a second operating mode, wherein in the second operating mode, the event camera is in an on state, and the RGB camera is in an on state, wherein
the processing module is further configured to: perform human pose estimation on a second RGB image by using the second pose estimation model, to obtain a third estimation result, wherein exposure time of the second RGB image is a capture time period in which the event camera captures the third event stream data; and after obtaining the second estimation result, use an average value of the second estimation result and the third estimation result as a 2D human pose within the capture time period of the third event stream data.

20. The apparatus according to claim 19, wherein in the second operating mode, the image processing apparatus meets any one of the following:
a quantity of event items comprised in event stream data captured by the event camera within unit time is less than or equal to the second quantity threshold, and light intensity detected by the image processing apparatus is less than an intensity threshold; or
a quantity of event items captured by the event camera within unit time is greater than the second quantity threshold, and light intensity detected by the image processing apparatus is greater than an intensity threshold; or
a frame rate needed by the image processing apparatus is less than or equal to the frame rate threshold, a quantity of event items captured by the event camera within unit time is less than or equal to the second quantity threshold, and light intensity detected by the image processing apparatus is less than an intensity threshold; or
a frame rate needed by the image processing apparatus is less than or equal to the frame rate threshold, a quantity of event items captured by the event camera within unit time is greater than the second quantity threshold, and light intensity detected by the image processing apparatus is greater than an intensity threshold; or
the image processing apparatus is in a power supply powered state, a quantity of event items captured by the event camera within unit time is less than or equal to the second quantity threshold, and light intensity detected by the image processing apparatus is less than an intensity threshold; or
the image processing apparatus is in a power supply-powered state, a quantity of event items captured by the event camera within unit time is greater than the second quantity threshold, and light intensity detected by the image processing apparatus is greater than an intensity threshold.

21. The apparatus according to any one of claims 17 to 20, wherein the detection module is further configured to determine that the image processing apparatus is in a third operating mode, wherein in the third operating mode, the RGB camera is in an on state, and the event camera is in an off state; and
the processing module is further configured to perform, by using the second pose estimation model, human pose estimation on a third RGB image captured by the RGB camera, to obtain a 2D human pose within exposure time of the third RGB image.

22. The apparatus according to claim 21, wherein in the third operating mode, the image processing apparatus meets any one of the following:
the image processing apparatus is in a power supply-powered state, a quantity of event items comprised in event stream data captured by the event camera within unit time is less than or equal to the second quantity threshold, and light intensity detected by the image processing apparatus is greater than an intensity threshold; or
a frame rate needed by the image processing apparatus is less than or equal to the frame rate threshold, a quantity of event items comprised in event stream data captured by the event camera within unit time is less than or equal to the second quantity threshold, and light intensity detected by the image processing apparatus is greater than an intensity threshold.

23. An image processing apparatus, comprising a processor and a memory, wherein the processor is coupled to the memory, the memory is configured to store a program, and the processor is configured to execute the program in the memory, to enable the image processing apparatus to perform the method according to any one of claims 1 to 11.

24. An electronic device, comprising an image processing apparatus, an event camera, and a red-green-blue RGB camera, wherein
the event camera is configured to capture event stream data, and the RGB camera is configured to capture an RGB image; and
the image processing apparatus is configured to perform the method according to any one of claims 1 to 11 based on the event stream data and the RGB image.

25. A computer-readable storage medium, wherein the computer-readable storage medium stores a computer program, and when the computer program runs on a computer, the computer is enabled to perform the method according to any one of claims 1 to 11.

26. A computer program product comprising instructions, wherein when the computer program product runs on a computer, the computer is enabled to perform the method according to any one of claims 1 to 11.
